# EUROPÄISCHE PATENTANMELDUNG

(11) **EP 4 108 083 A1**
(43) Veröffentlichungstag der Anmeldung: **28.12.2022**
(21) Anmeldenummer: 22020232.9
(22) Anmeldetag: 23.05.2022
(51) Int. Cl.: A01M 23/30, A01M 23/24, A01M 23/38, A01M 25/00

(54) **FANGVORRICHTUNG; VERFAHREN ZUM TÖTEN EINES ZIELTIERS; VERFAHREN ZUR VERWENDUNG EINER FANGVORRICHTUNG**

(30) Priorität: 21.06.2021 DE 102021116010
(71) Anmelder: Steiner, Michael, 74388 Talheim (DE)
(72) Erfinder: Steiner, Michael, 74388 Talheim (DE)
(74) Vertreter: Patentanwälte Schuster, Müller & Partner mbB

(57) **Zusammenfassung**

Es werden Fangvorrichtung (1), ein Verfahren zum Töten eines Zieltiers und ein Verfahren zur Verwendung einer Fangvorrichtung vorgeschlagen, wobei die Fangvorrichtung (1) einen Korpus (2), der mindestens eine Öffnung (6, 19) aufweist, aufweist, wobei in dem Korpus (2) mindestens eine Schlagfalle (17) angeordnet ist, die mit mindestens einem Auslöser (8) und/oder mit mindestens einem Sensor (9) in Wirkverbindung steht, und/oder in dem Korpus (2) mindestens eine Köderfläche (12) und mindestens ein Sensor (9) angeordnet sind, wodurch die Fangvorrichtung (1) effektiv und arbeitszeitsparend einsetzbar ist.

## Beschreibung

### Stand der Technik

Die Erfindung geht aus von einer Fangvorrichtung, nach der Gattung des Anspruchs 1, einem Verfahren zum Töten eines Zieltiers, nach der Gattung des Anspruchs 11, und einem Verfahren zur Verwendung einer Fangvorrichtung, nach der Gattung des Anspruchs 14.

Fangvorrichtungen gehören seit langer Zeit zum Stand der Technik. So sind mit einem Köder bestückte Tierfallen bekannt, bei denen ein federbeeinflusster Bügel nach Berühren der den Köder enthaltenden Klappe umschlägt und dabei das zu fangende Tier, z.B. Maus, Ratte, festklemmt. Bei den bekannten Tierfallen dieser Art drückt der Schlagbügel in der gespannten Lage gegen die Mitte eines einerseits auf der Grundplatte angelenkten, anderseits in eine Rast der Köderklappe eingehängten Arretierbügels, so dass derselbe stark beansprucht ist und sich nach kurzem Gebrauch verbiegt. Zudem wird der Arretierbügel bei Lösung seiner Verbindung mit der Köderklappe zufolge des Rückdruckes des Schlagbügels um 180° nach rückwärts geschleudert, wodurch eine Verletzung der Bedienungsperson nicht ausgeschlossen ist. Um diese Nachteile zu beseitigen, wird in der österreichischen Patentschrift AT 107024 eine Schlag-Bügelfalle beschrieben, deren Arretierbügel unmittelbar oberhalb seines Drehpunktes zur Aufnahme des gespannten Schlagbügels eine Schleife besitzt, wodurch der vom Schlagbügel ausgeübte Druck ohne Beanspruchung des Arretierbügels vom Auflager aufgenommen wird. Vorteilhaft ist, dass der Arretierbügel während der Auslösung des Schlagbügels fast unbeeinflusst bleibt, da der Schlagbügel bereits nach einem Bruchteil seines Weges von der Schleife abgleitet und daher jeden Kontakt mit dem Arretierbügel verliert. Nachteilig ist allerdings, dass die ausgelöste Tierfalle ohne die Entfernung des gefangenen Tieres und ohne ein erneutes Spannen des Schlagbügels nicht mehr einsatzbereit ist.

Um nach dem Töten eines Tieres die sofortige Wiedereinsetzbarkeit zu gewährleisten, wird in der deutschen Offenlegungsschrift DE 10 2014 016 514 A1 eine Tierfalle, insbesondere Ratten- oder Mausefalle, vorgeschlagen, umfassend eine Fangvorrichtung mit einer Einwegstrecke und wenigstens eine stromführende Elektroden aufweisende Tötungsvorrichtung, in welchem ein gefangenes Tier tötbar ist, wobei es einen auf eine Tötungsvorrichtung nachfolgenden Auslassbereich aufweist, durch welchen das Tier aus der Tierfalle entlassbar ist. Nachteilig ist hierbei, dass die vorbekannte Fangvorrichtung konstruktiv sehr aufwändig ist, wodurch sie auch störanfällig wird.

Der Erfindung liegt daher die Aufgabe zugrunde, eine die Nachteile des Standes der Technik überwindende einer Fangvorrichtung, ein die Nachteile des Standes der Technik überwindendes Verfahren zum Töten eines Zieltiers und ein die Nachteile des Standes der Technik überwindendes Verfahren zur Verwendung einer Fangvorrichtung bereitzustellen.

### Die Erfindung und ihre Vorteile

Die erfindungsgemäße Fangvorrichtung, mit den Merkmalen des Anspruchs 1, das erfindungsgemäße Verfahren zum Töten eines Zieltiers, mit den Merkmalen des Anspruchs 11, und das erfindungsgemäße Verfahren zur Verwendung einer Fangvorrichtung, mit den Merkmalen des Anspruchs 14, haben demgegenüber den Vorteil, dass die erfindungsgemäße Fangvorrichtung einen Korpus, der mindestens eine Öffnung aufweist, aufweist, wobei in dem Korpus mindestens eine Schlagfalle angeordnet ist, die mit mindestens einem Auslöser und/oder mit mindestens einem Sensor in Wirkverbindung steht, und/oder in dem Korpus mindestens eine Köderfläche und mindestens ein Sensor angeordnet sind.

Nach einer vorteilhaften Ausgestaltung der erfindungsgemäßen Fangvorrichtung ist mindestens ein Sensor ein signalübertragender und/oder ein signalempfangender Sensor. Durch einen Sensor ist die Begehung der Fangvorrichtung durch ein Tier (Zieltier) detektierbar. Beim Auslösen mindestens eines Sensors wird bevorzugt ein Signal ausgesendet, das von einem Empfänger empfangbar ist. Als Empfänger kann eine digitale Erfassungseinheit zum Einsatz kommen, so dass es möglich ist, die Tieraktivitäten in der erfindungsgemäßen Fangvorrichtung zu überwachen und ggfls. zu dokumentieren. Durch die Kenntnis der Frequentierung der erfindungsgemäßen Fangvorrichtung ist es möglich, dass eine ansonsten routinemäßige Kontrolle der erfindungsgemäßen Fangvorrichtung bedarfsgerecht ausgerichtet werden kann, wodurch Arbeitszeit und Kosten einsparbar sind.

Nach einer zusätzlichen vorteilhaften Ausgestaltung der erfindungsgemäßen Fangvorrichtung ist in dem Korpus mindestens eine Schlagfalle angeordnet, die mit mindestens einem Auslöser und/oder mit mindestens einem Sensor in Wirkverbindung steht, wobei die Schlagfalle einen Schlagbügel aufweist, der mittels eines Elektromotors aus einer entspannten Lage in eine gespannte Lage verbringbar ist. Im Falle, dass die erfindungsgemäße Fangvorrichtung eine Tierfalle (z.B. Schlagfalle) aufweist, kann alternativ oder ergänzend als Signalempfänger auch eine Motorsteuerung zum Einsatz kommen, so dass der Schlagbügel, der sich in einer ausgelösten Lage befindet, mittels des Elektromotors in eine gespannte Lage zu bewegt wird, wodurch die Tierfalle in einen fangbereiten Zustand versetzt wird.

Nach einer zusätzlichen vorteilhaften Ausgestaltung der erfindungsgemäßen Fangvorrichtung ist zwischen dem Schlagbügel und dem Elektromotor mindestens ein Bowdenzug und/oder mindestens ein Gestänge angeordnet.

Nach einer zusätzlichen vorteilhaften Ausgestaltung der erfindungsgemäßen Fangvorrichtung weist die Fangvorrichtung eine Stromversorgung auf.

Nach einer diesbezüglichen vorteilhaften Ausgestaltung der erfindungsgemäßen Fangvorrichtung ist die Stromversorgung mindestens ein Akkumulator. Denkbar wäre auch der Einsatz einer Powerbank

Nach einer zusätzlichen vorteilhaften Ausgestaltung der erfindungsgemäßen Fangvorrichtung ist der Korpus zumindest teilweise aus Kunststoff.

Nach einer zusätzlichen vorteilhaften Ausgestaltung der erfindungsgemäßen Fangvorrichtung weist die Fangvorrichtung ein Halteelement auf.

Nach einer zusätzlichen vorteilhaften Ausgestaltung der erfindungsgemäßen Fangvorrichtung weist die Fangvorrichtung mindestens eine Kletterhilfe und/oder mindestens eine Serviceöffnung auf.

Nach einer zusätzlichen vorteilhaften Ausgestaltung der erfindungsgemäßen Fangvorrichtung weist die Fangvorrichtung mindestens eine Kammer auf.

Nach einer vorteilhaften Ausgestaltung des erfindungsgemäßen Verfahrens zum Töten eines Zieltieres mit einer Fangvorrichtung, die einen Korpus, der mindestens eine Öffnung aufweist, aufweist, wobei das durch die Öffnung in den Korpus eingedrungene Zieltier durch Auslösung einer einen Schlagbügel aufweisenden Schlagfalle durch den Schlagbügel, der sich durch die Auslösung aus einer gespannten Lage in eine entspannte Lage bewegt, getötet wird, wobei der Schlagbügel direkt oder zeitverzögert nach dem Erreichen der entspannten Lage mittels eines Elektromotors aus der entspannten Lage in die gespannte Lage verbracht wird, oder das durch die Öffnung in den Korpus eingedrungene Zieltier an mindestens einer in den Korpus angeordneten Köderfläche Giftköder aufnimmt, um anschließend, bevor es verendet, den Korpus wieder zu verlassen, wobei die Anwesenheit des Zieltieres innerhalb des Korpusses durch mindestens einen Sensor erfasst wird, gleitet das durch den Schlagbügel getötete Zieltier durch Verbringung des Schlagbügels in die gespannte Lage frei wird, so dass es aufgrund der Schwerkraft aus dem Korpus.

Nach einer zusätzlichen vorteilhaften Ausgestaltung des erfindungsgemäßen Verfahrens wird als Fangvorrichtung eine Fangvorrichtung, gemäß einem der Ansprüche 1 bis 10, eingesetzt.

Nach einer vorteilhaften Ausgestaltung des erfindungsgemäßen Verfahrens zur Verwendung einer Fangvorrichtung, die einen Korpus, der mindestens eine Öffnung aufweist, aufweist, wobei in dem Korpus mindestens eine Schlagfalle angeordnet ist, die durch ihre Auslösung aus einem fangbereiten Zustand in einen nicht fangbereiten Zustand versetzt wird, wobei die Schlagfalle einen Schlagbügel aufweist, der mittels eines Elektromotors aus einer entspannten Lage in eine gespannte Lage verbracht wird, wodurch der fangbereite Zustand der Schlagfalle wieder hergestellt wird, und/oder das in dem Korpus mindestens ein Sensorangeordnet ist, wobei die Anwesenheit des Zieltieres innerhalb des Korpusses durch mindestens einen Sensor erfasst wird, wird als Fangvorrichtung eine Fangvorrichtung, gemäß einem der Ansprüche 1 bis 10, eingesetzt.

Weitere Vorteile und vorteilhafte Ausgestaltungen der Erfindung sind der nachfolgenden Beschreibung und der Zeichnung entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine Skizze einer erfindungsgemäßen Fangvorrichtung,
- Fig. 2: eine Skizze eines weiteren Ausführungsbeispiels einer erfindungsgemäßen Fangvorrichtung,
- Fig. 3: eine Skizze eines weiteren Ausführungsbeispiels einer erfindungsgemäßen Fangvorrichtung,
- Fig. 4: eine Skizze einer erfindungsgemäßen Fangvorrichtung,
- Fig. 5: eine Skizze eines weiteren Ausführungsbeispiels einer erfindungsgemäßen Fangvorrichtung,
- Fig. 6: eine Skizze eines weiteren Ausführungsbeispiels einer erfindungsgemäßen Fangvorrichtung,
- Fig. 7: eine Skizze einer erfindungsgemäßen Fangvorrichtung,
- Fig. 8: eine Skizze eines weiteren Ausführungsbeispiels einer erfindungsgemäßen Fangvorrichtung,
- Fig. 9: eine Skizze eines weiteren Ausführungsbeispiels einer erfindungsgemäßen Fangvorrichtung,
- Fig. 10: eine Skizze einer erfindungsgemäßen Fangvorrichtung,
- Fig. 11: eine Skizze eines weiteren Ausführungsbeispiels einer erfindungsgemäßen Fangvorrichtung,
- Fig. 12: eine Aufsicht der erfindungsgemäßen Fangvorrichtung, gemäß Fig. 4,
- Fig. 13: eine seitliche Schnittzeichnung, gemäß der Linie B-B aus Fig. 12,
- Fig. 14: einen Ausschnitt X aus Fig. 13,
- Fig. 15: eine perspektivische Ansicht eines weiteren Ausführungsbeispiels einer erfindungsgemäßen Fangvorrichtung,
- Fig. 16: eine Seitenansicht der erfindungsgemäßen Fangvorrichtung 1, gemäß Fig. 15,
- Fig. 17: eine weitere Seitenansicht der erfindungsgemäßen Fangvorrichtung, gemäß Fig. 15,
- Fig. 18: eine seitliche Schnittzeichnung, gemäß der Linie A-A aus Fig. 17,
- Fig. 19: eine Aufsicht der erfindungsgemäßen Fangvorrichtung, gemäß Fig. 15, und
- Fig. 20: eine seitliche Schnittzeichnung, gemäß der Linie B-B aus Fig. 19.

### Beschreibung des Ausführungsbeispiels

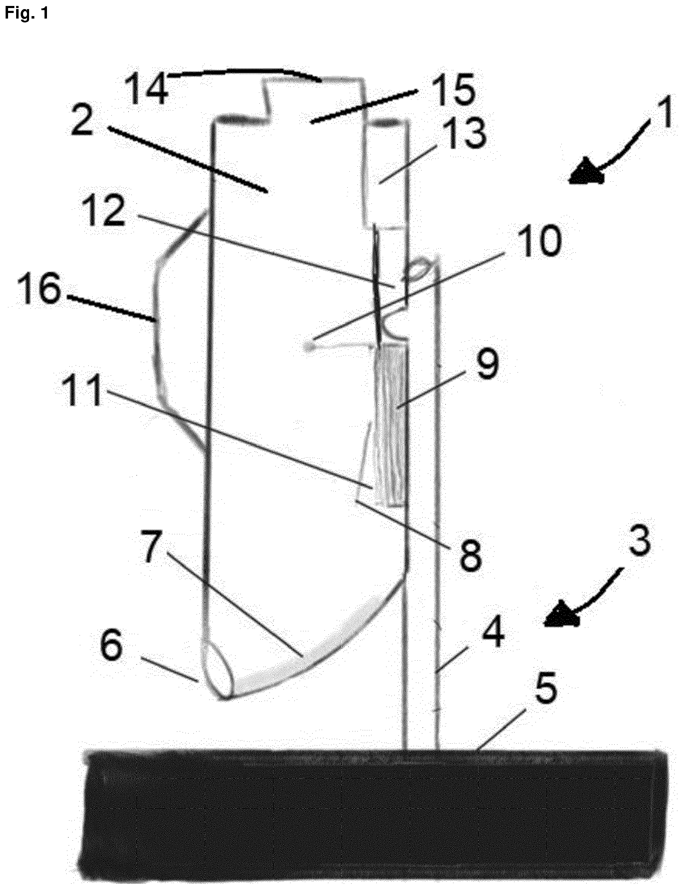

Fig. 1 zeigt eine Skizze einer erfindungsgemäßen Fangvorrichtung 1. Die erfindungsgemäße Fangvorrichtung 1 weist einen Korpus 2 (z.B. aus Kunststoff, glattem Kunststoff) auf, der an einem Halteelement 3, das bevorzugt eine Haltestange 4 und einen Fuß 5 (z.B. Steinplatte), der zur Erhöhung der Standfestigkeit bevorzugt schwer ausgestaltet ist und beispielsweise ein Gewicht von 6 kg aufweist, beweglich oder fest fixiert angeordnet ist. Im unteren Bereich des Korpus 2 ist eine Öffnung 6 angeordnet, durch die ein nicht dargestelltes zu fangendes Tier (Zieltier) in das Innere des Korpus 2 gelangen kann. Eine im Inneren des Korpus 2 angeordnete Kletterhilfe 7 erleichtert die Bewegung des zu fangenden Tieres innerhalb des Korpus 2. Die Kletterhilfe 7 kann bevorzugt dadurch gebildet werden, dass die Innenseite des Korpus 2 zumindest stellenweise eine hierzu geeignete Oberflächenstruktur aufweist. Denkbar ist auch, dass als Kletterhilfe 7 z.B. zumindest stellenweise auf die Innenseite des Korpus 2 aufgesprühter Sand, Moos, Rindenmulch oder ein Seil eingesetzt wird, um aufgrund deren strukturreichen Beschaffenheit einem Zieltier den Einstieg in den Korpus 2 und/oder die Bewegung innerhalb des Korpus 2 zu erleichtern.

Im Inneren des Korpus 2 ist ein Auslöser 8 (z.B. Trittplatte) oder ein einen Auslöser 8 (z.B. Trittplatte) aufweisender Sensor 9, der bevorzugt direkt an dem Korpus 2 befestigt ist, angeordnet. Sobald das zu fangende Tier den Auslöser 8 betätigt hat, wird von dem Sensor 9 mindestens ein Signal ausgesendet. Die Übertragung des Signals erfolgt bevorzugt mittels einer Antenne 10 und/oder kabelgebunden. Um das Zieltier zu dem Auslöser 8 zu locken, ist der Einsatz eines Lockstoffes 11 denkbar.

Im Inneren des Korpus 2 ist zur Aufnahme eines Giftköders mindestens eine Köderfläche 12 angeordnet. Nachdem das Zieltier mit dem Giftköder (z.B. langsam wirkender Giftköder) in Berührung gekommen ist und/oder den Giftköder zumindest teilweise aufgenommen hat, kann das vergiftete Zieltier den Korpus 2 durch die Öffnung 6 verlassen. Dadurch ist sichergestellt, dass das Zieltier außerhalb der erfindungsgemäßen Fangvorrichtung 1 verendet.

Zur Bereitstellung der für den Betrieb der erfindungsgemäßen Fangvorrichtung 1 benötigten Energie, wird bevorzugt mindestens ein Akkumulator 13, bevorzugt mindestens ein Wechsel-Akkumulator, oder eine Powerbank eingesetzt. Der Akkumulator 13 kann innerhalb oder außerhalb des Korpus 2 angeordnet sein. Bevorzugt ist der Akkumulator 13 innerhalb des Korpus 2 angeordnet.

Um die Wartung und/oder Reinigung der erfindungsgemäßen Fangvorrichtung 1 zu erleichtern, weist der Korpus 2 eine mittels eines Deckels 14 (z.B. Schraubdeckel) verschließbare Serviceöffnung 15 auf.

Zum leichten Transport weist die erfindungsgemäße Fangvorrichtung 1 einen Griff 16 auf.

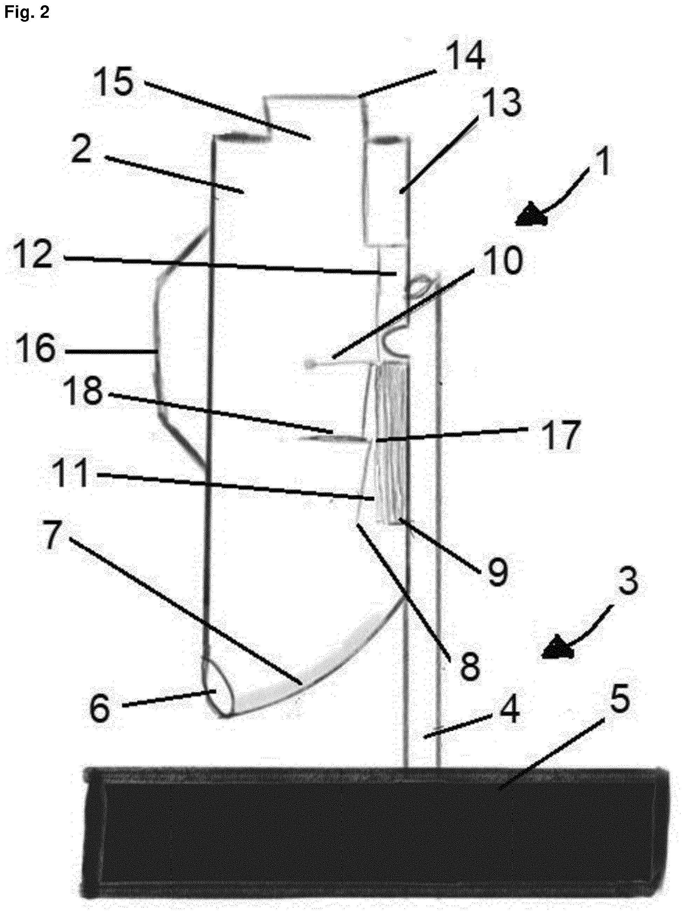

Fig. 2 zeigt eine Skizze eines weiteren Ausführungsbeispiels einer erfindungsgemäßen Fangvorrichtung 1. Anstelle oder ergänzend zu dem Giftköder kommt bei diesem Ausführungsbeispiel eine Schlagfalle 17 (z.B. Totschlagfalle, Bügelfangfalle) zum Einsatz. Ausgelöst wird die Schlagfalle 17 mittels des Auslösers 8 (z.B. Trittplatte). Durch die Aktivierung des Auslösers 8 durch das Zieltier und dem damit verbundenen Auslösen der Schlagfalle 17 kommt es durch einen Schlagbügel 18 bevorzugt durch Genickbruch zu einem tierschutzgerechten Abtöten des Zieltieres. Durch einen Sensor 9 oder mehrere Sensoren 9 wird das Auslösen sowie der Fangerfolg oder die Fehlauslösung bevorzugt über mobile Daten gemeldet. Alternativ oder ergänzend wird aufgrund des Auslösens mindestens ein Signal an eine nicht dargestellte Motorsteuerungseinheit versendet, durch die ein nicht dargestellter Elektromotor den in der ausgelösten Lage befindlichen Schlagbügel 18 in eine gespannte Lage bewegt, wodurch die Schlagfalle 17 in einen fangbereiten Zustand versetzt wird. Die in der erfindungsgemäßen Fangvorrichtung 1, die auch als automatisierte Ratten-Tötungsvorrichtung mittels Schlagfalle bezeichnet werden kann, vorhandene Schlagfalle 17 wird somit automatisch neu gespannt und damit automatisch fangbereit gestellt. Das automatisierte Spannen der Schlagfalle 17 wird durch ziehen, schieben und/oder drücken des Schlagbügels 18 unter Zuhilfenahme eines Elektromotors oder eines externen Antriebes bewerkstelligt. Durch das Spannen des Schlagbügels 18 wird das getötete Zieltier frei, so dass es aufgrund der Schwerkraft in Richtung Öffnung 6 gleitet, um den Korpus 2 durch die Öffnung 6 zu verlassen. Außerhalb des Korpus 2 erfolgt der Abtransport des getöteten Zieltieres bevorzugt durch im Abwasserkanal befindliches Abwasser.

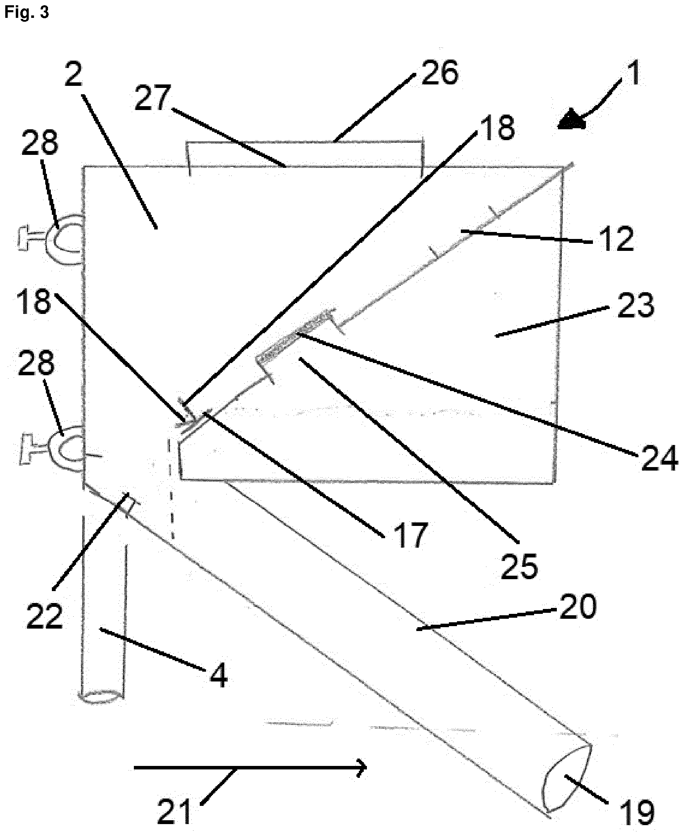

Fig. 3 zeigt eine Skizze eines weiteren Ausführungsbeispiels einer erfindungsgemäßen Fangvorrichtung 1. Besonders geeignet ist die erfindungsgemäße Fangvorrichtung 1 zum Einsatz in einem Abwasserkanalsystem, wobei eine Öffnung 19 eines Rohres 20 entgegen einer Fließrichtung 21 des Abwassers angeordnet ist. Durch das Rohr 20 gelangt das Zieltier mittels eines Trittbrettes 22 in das Innere des Korpus 2. In der Nähe des Rohres 20, das zur Erleichterung des Eintritts des Zieltieres bevorzugt schräg an dem Korpus 2 angeordnet ist, ist die einen Schlagbügel 18 und einen Auslöser 8 aufweisende Schlagfalle 17 angeordnet. Ausgelöst wird die Schlagfalle 18 mittels des Auslösers 8 (z.B. Trittplatte). Durch die Aktivierung des Auslösers 8 durch das Zieltier und dem damit verbundenen Auslösen der Schlagfalle 17 kommt es durch einen Schlagbügel 18 bevorzugt durch Genickbruch zu einem tierschutzgerechten Abtöten des Zieltieres. Durch einen Sensor oder mehrere Sensoren wird das Auslösen sowie der Fangerfolg oder die Fehlauslösung bevorzugt über mobile Daten gemeldet. Alternativ oder ergänzend wird aufgrund des Auslösens mindestens ein Signal an eine nicht dargestellte Motorsteuerungseinheit versendet, durch die ein nicht dargestellter Elektromotor, der bevorzugt ebenfalls mittels mindestens einem Akkumulator (Wechsel-Akkumulator) oder einer Powerbank betrieben wird, den in der ausgelösten Lage befindlichen Schlagbügel 18 in eine gespannte Lage bewegt, wodurch die Schlagfalle 17 in einen fangbereiten Zustand versetzt wird. Die in der erfindungsgemäßen Fangvorrichtung 1, die auch als automatisierte Ratten-Tötungsvorrichtung mittels Schlagfalle bezeichnet werden kann, vorhandene Schlagfalle 17 wird somit automatisch neu gespannt und damit automatisch fangbereit gestellt. Das automatisierte Spannen der Schlagfalle 17 wird durch ziehen, schieben und/oder drücken des Schlagbügels 18 unter Zuhilfenahme eines Elektromotors oder eines externen Antriebes bewerkstelligt. Durch das Spannen des Schlagbügels 18 wird das getötete Zieltier frei, so dass es aufgrund der Schwerkraft in das Rohr 19 fällt und in Richtung Öffnung 19 gleitet, um das Rohr 20 durch die Öffnung 19 zu verlassen. Außerhalb des Rohres 20 erfolgt der Abtransport des getöteten Zieltieres bevorzugt durch im Abwasserkanal befindliches Abwasser.

Um den Elektromotor zu schützen, ist der Elektromotor in einer Kammer 23 untergebracht. Die Kammer 23 ist durch eine mittels eines Deckels 24 (z.B. Schraubdeckel) verschließbare Serviceöffnung 25 zugänglich.

Im Inneren des Korpus 2 ist zur Aufnahme eines Giftköders mindestens eine Köderfläche 12 angeordnet. Nachdem das Zieltier mit dem Giftköder (z.B. langsam wirkender Giftköder) in Berührung gekommen ist und/oder den Giftköder zumindest teilweise aufgenommen hat, kann das vergiftete Zieltier den Korpus 2 durch das Rohr 20 und die Öffnung 19 verlassen. Dadurch ist sichergestellt, dass das Zieltier außerhalb der erfindungsgemäßen Fangvorrichtung 1 verendet.

Um die Wartung und/oder Reinigung der erfindungsgemäßen Fangvorrichtung 1 zu erleichtern, weist der Korpus 2 eine mittels eines Deckels 26 (z.B. Schraubdeckel) verschließbare Serviceöffnung 27 auf. Bevorzugt ist die erfindungsgemäße Fangvorrichtung 1 an einer Haltestange 4 mittels Halteklammern 28 verschieblich angeordnet, so das die erfindungsgemäße Fangvorrichtung 1 zu Wartungs- und/oder Reinigungszwecken nach oben gezogen werden kann.

Denkbar wäre auch, dass die erfindungsgemäße Fangvorrichtung 1 nur mit mindestens einer Schlagfalle 17 oder nur mit einem Giftköder ausgestattet ist. Zusätzlich denkbar wäre der Einsatz eines Köders, um ein Zieltier anzulocken.

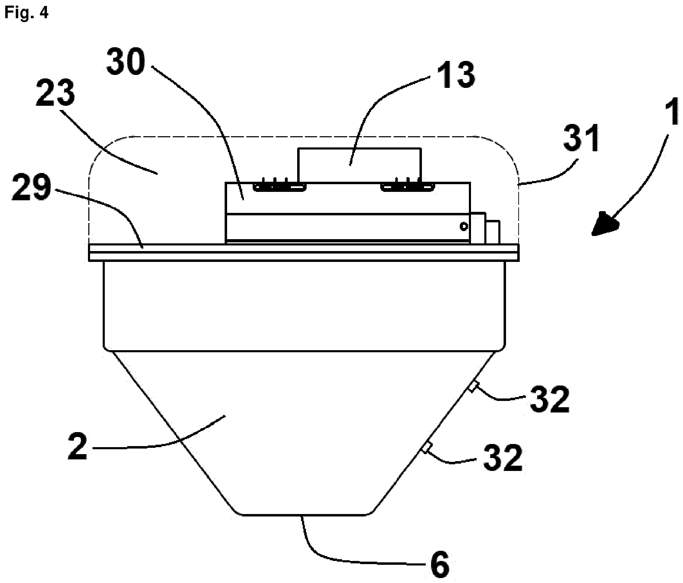

Fig. 4 zeigt eine Seitenansicht eines weiteren Ausführungsbeispiels einer erfindungsgemäßen Fangvorrichtung 1. Abgetrennt durch einen Deckel 29 befindet sich außerhalb des Korpusses 2 in einer Kammer 23 ein Elektromotor 30 (z.B. Spindelantrieb), der als Stromversorgung den Akkumulator 13 aufweist und der zum Schutz durch eine Haube 31 abgedeckt ist. Mit Befestigungsvorrichtungen 32 ist die im Inneren des Korpusses 2 Schlagfalle 17 fixiert. Anstelle oder ergänzend zu der Schlagfalle 18 ist bei diesem Ausführungsbeispiel auch der Einsatz eines Giftköders denkbar.

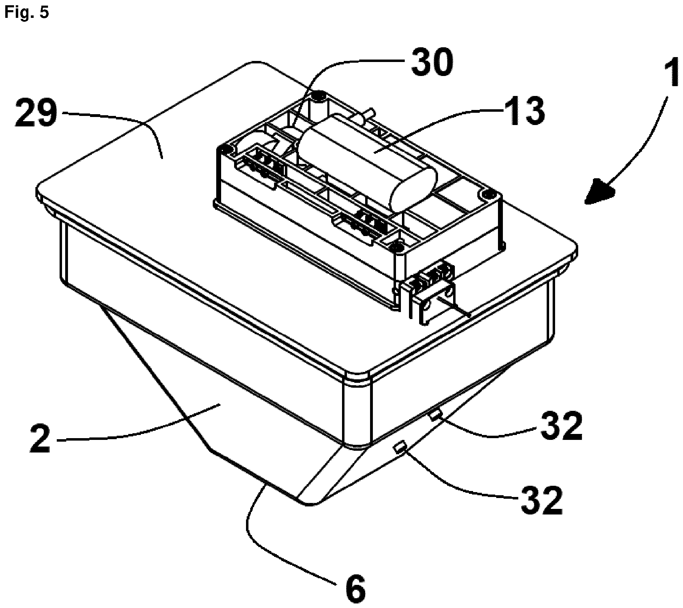

Fig. 5 zeigt eine perspektivische Ansicht der erfindungsgemäßen Fangvorrichtung 1, gemäß Fig. 4, allerdings ohne die Haube 31.

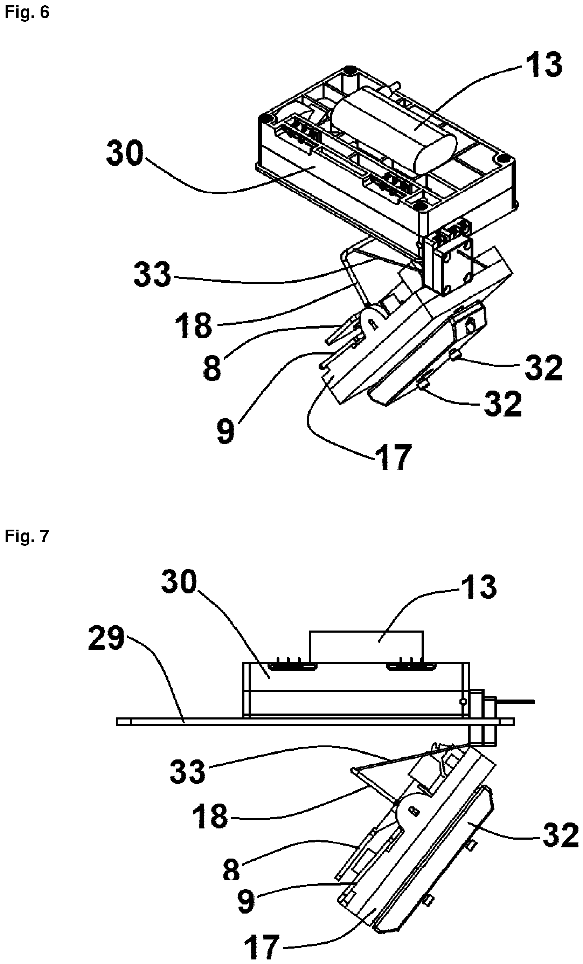

Fig. 6 zeigt eine perspektivische Detailansicht der erfindungsgemäßen Fangvorrichtung 1, gemäß Fig. 4. Sichtbar ist die Schlagfalle 17 mit ihrem Schlagbügel 18, an dem ein Bowdenzug 33 angeordnet ist, so dass durch den Elektromotor 30 der Schlagbügel 18 aus einer entspannten Lage in eine gespannte Lage verbracht wird, wodurch der fangbereite Zustand der Schlagfalle 17 wieder hergestellt wird. Der Schlagbügel 18 rastet in der gespannten Lage ein. Nach dem Einrasten entspannt der Elektromotor 30 den Bowdenzug 33, so dass sich der Schlagbügel 18 nach dem Auslösen der Schlagfalle 17 ungehindert in die entspannte Lage bewegen kann, um anschließend wieder in die gespannte Lage verbracht zu werden.

Fig. 7 zeigt eine seitliche Detailansicht der erfindungsgemäßen Fangvorrichtung 1, gemäß Fig. 4.

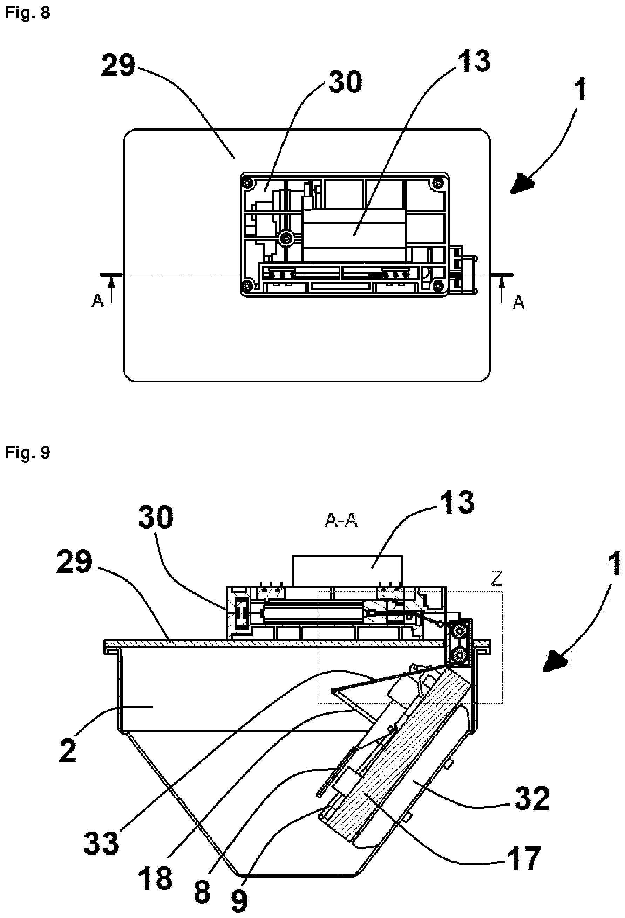

Fig. 8 zeigt eine Aufsicht der erfindungsgemäßen Fangvorrichtung 1, gemäß Fig. 4.

Fig. 9 zeigt eine seitliche Schnittzeichnung, gemäß der Linie A-A aus Fig. 8. Über Umlenkrollen 34 wird der Bowdenzug 33 zu dem Elektromotor 30 geführt.

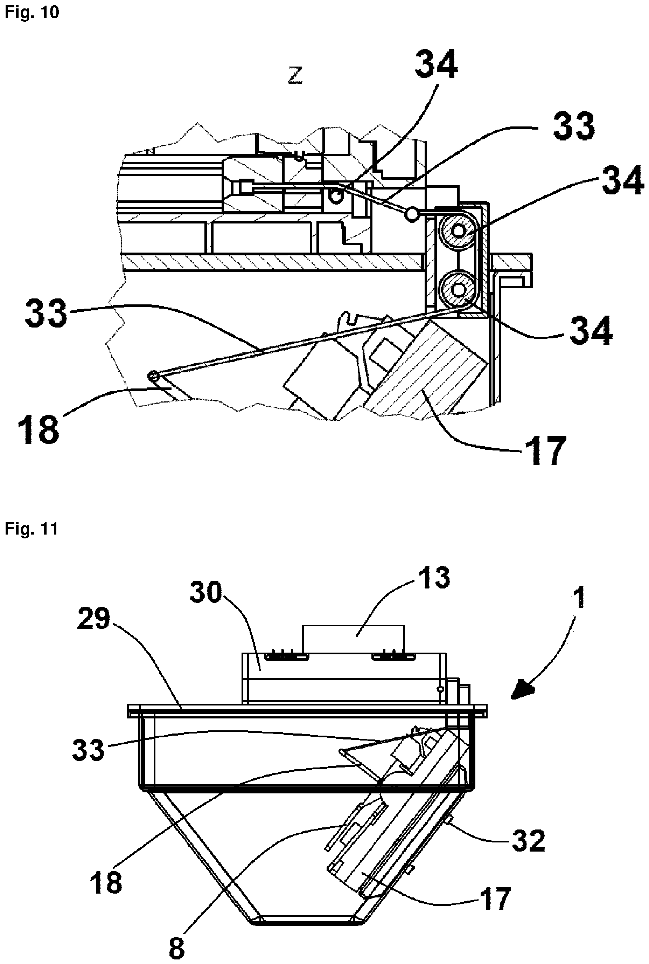

Fig. 10 zeigt einen Ausschnitt Z aus Fig. 9.

Fig. 11 zeigt eine seitliche Darstellung der erfindungsgemäßen Fangvorrichtung 1, gemäß Fig. 4, wobei der Korpus 2 durchsichtig dargestellt ist, um einen Blick auf die Schlagfalle 17 zu ermöglichen.

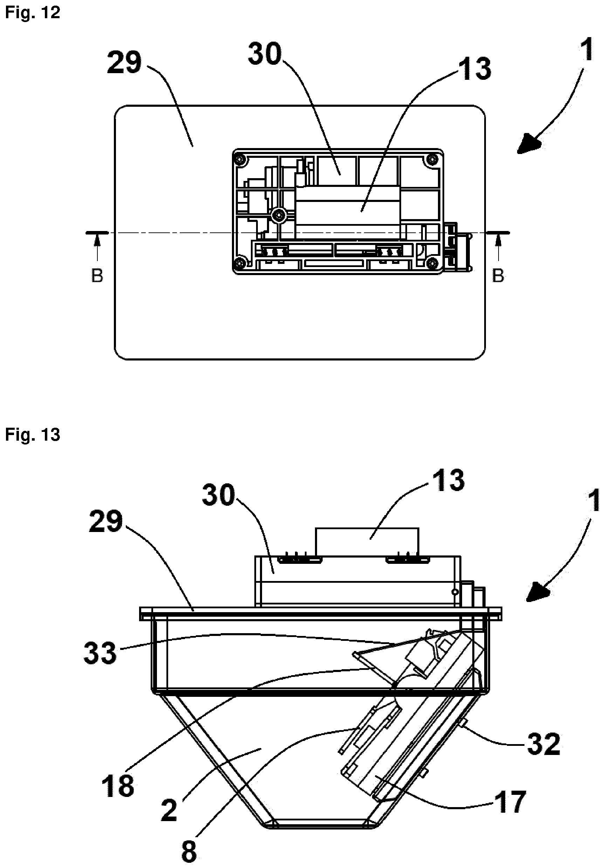

Fig. 12 zeigt eine Aufsicht der erfindungsgemäßen Fangvorrichtung 1, gemäß Fig. 4.

Fig. 13 zeigt eine seitliche Schnittzeichnung, gemäß der Linie B-B aus Fig. 12.

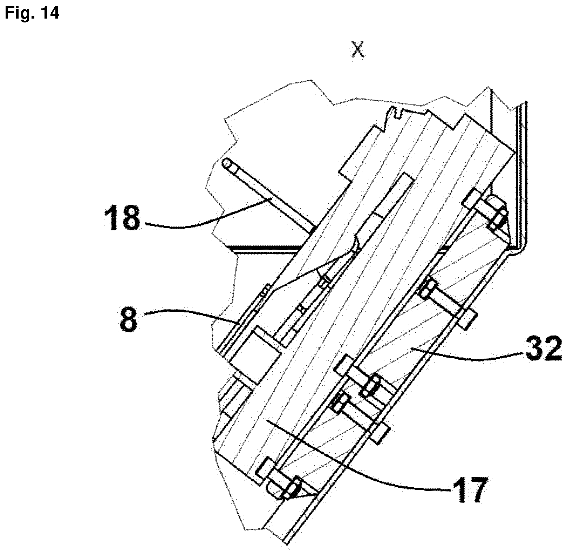

Fig. 14 zeigt einen Ausschnitt X aus Fig. 13.

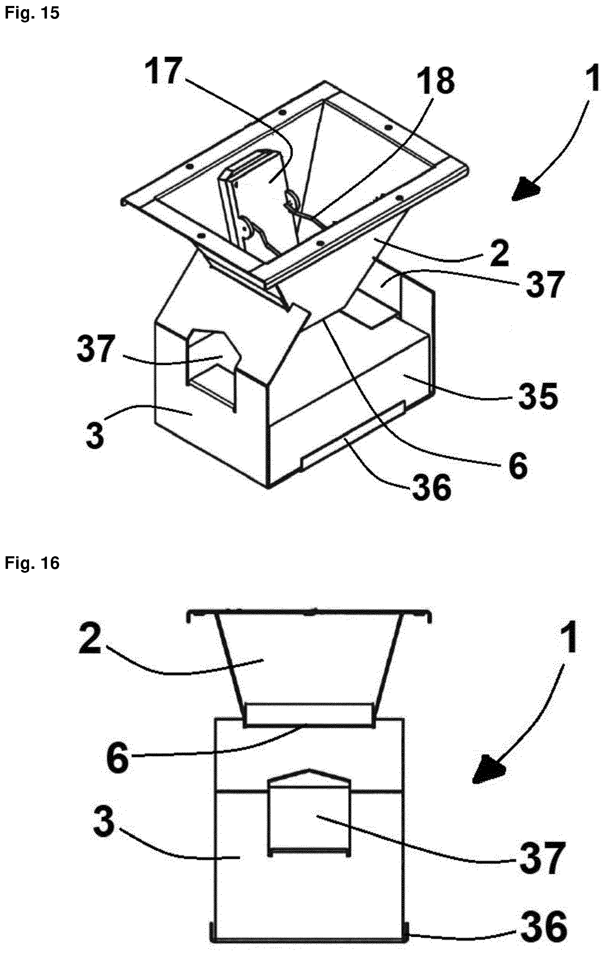

Fig. 15 zeigt eine perspektivische Ansicht eines weiteren Ausführungsbeispiels einer erfindungsgemäßen Fangvorrichtung 1. Der Übersichtlichkeit halber wurde die erfindungsgemäße Fangvorrichtung 1 nur ab dem Korpus 2 und nur mit einer angedeuteten Schlagfalle 17 dargestellt. Der Korpus 2, der bevorzugt aus Edelstahl gefertigt ist, ist an einer Haltevorrichtung 3 angeordnet. Die Haltevorrichtung 3 weist ein Gewicht 35, bevorzugt einen Stein, auf, mit dem die erfindungsgemäße Fangvorrichtung 1 beschwert ist. Oberhalb des Gewichtes 35 ist die Öffnung 6 des Korpusses 2 angeordnet, so dass das Zieltier die Öffnung 6 vom Gewicht 35 aus erreichen kann. Nachdem das Zieltier innerhalb des Korpusses 2 durch den Schlagbügel 18 getötet wurde, gleitet es nach der Freigabe durch die Öffnung 6 aus dem Korpus 2 heraus. In Abhängigkeit davon, ob das Gewicht 35, das mit einer Halterung 36 in seiner Position fixiert ist, mit Abwasser überflutet ist oder nicht, wird das getötete Zieltier sofort oder bei der nächsten Überflutung von dem Gewicht 35 forttransportiert. Tragegriffe 37 erleichtern den Transport der erfindungsgemäßen Fangvorrichtung 1 zu ihrem jeweiligen Einsatzort. Anstelle oder ergänzend zu der Schlagfalle 18 ist bei diesem Ausführungsbeispiel auch der Einsatz eines Giftköders denkbar.

Fig. 16 zeigt eine Seitenansicht der erfindungsgemäßen Fangvorrichtung 1, gemäß Fig. 15.

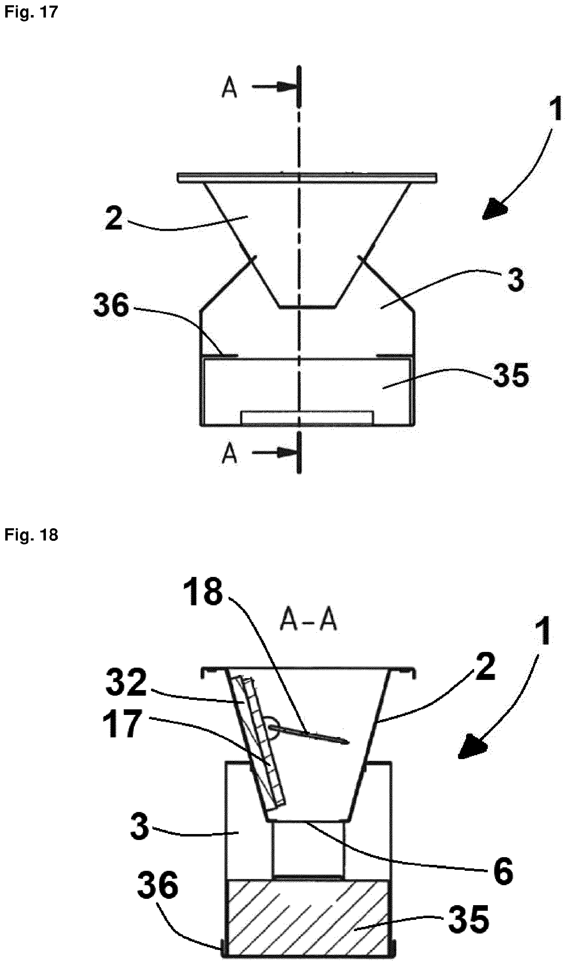

Fig. 17 zeigt eine weitere Seitenansicht der erfindungsgemäßen Fangvorrichtung 1, gemäß Fig. 15.

Fig. 18 zeigt eine seitliche Schnittzeichnung, gemäß der Linie A-A aus Fig. 17.

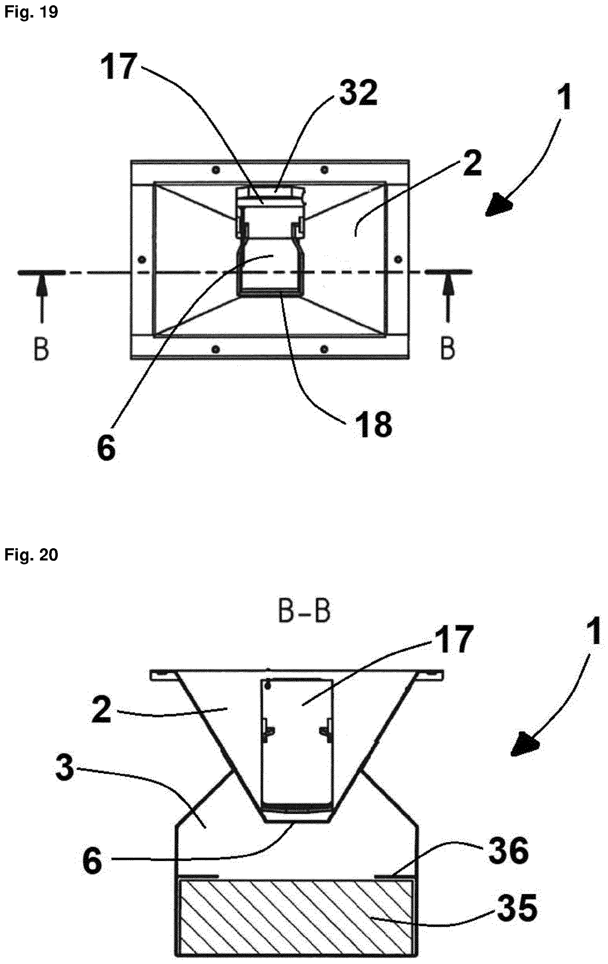

Fig. 19 zeigt eine Aufsicht der erfindungsgemäßen Fangvorrichtung 1, gemäß Fig. 15.

Fig. 20 zeigt eine seitliche Schnittzeichnung, gemäß der Linie B-B aus Fig. 19.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Fangvorrichtung
- 2: Korpus
- 3: Haltevorrichtung
- 4: Haltestange
- 5: Fuß
- 6: Öffnung
- 7: Kletterhilfe
- 8: Auslöser
- 9: Sensor
- 10: Antenne
- 11: Lockstoff
- 12: Köderfläche
- 13: Akkumulator
- 14: Deckel
- 15: Serviceöffnung
- 16: Griff
- 17: Schlagfalle
- 18: Schlagbügel
- 19: Öffnung
- 20: Rohr
- 21: Fließrichtung
- 22: Trittbrett
- 23: Kammer
- 24: Deckel
- 25: Serviceöffnung
- 26: Deckel
- 27: Serviceöffnung
- 28: Halteklammer
- 29: Deckel
- 30: Elektromotor
- 31: Haube
- 32: Befestigungsvorrichtung
- 33: Bowdenzug
- 34: Umlenkrolle
- 35: Gewicht
- 36: Halterung
- 37: Tragegriff

## Patentansprüche

1. Fangvorrichtung (1),
- mit einem Korpus (2), der mindestens eine Öffnung (6, 19) aufweist, **dadurch gekennzeichnet,**
**dass** in dem Korpus (2) mindestens eine Schlagfalle (17) angeordnet ist, die mit mindestens einem Auslöser (8) und/oder mit mindestens einem Sensor (9) in Wirkverbindung steht, und/oder in dem Korpus (2) mindestens eine Köderfläche (12) und mindestens ein Sensor (9) angeordnet sind.

2. Fangvorrichtung (1), nach Anspruch 1,
**dadurch gekennzeichnet,**
**dass** mindestens ein Sensor (9) ein signalübertragender und/oder ein signalempfangender Sensor (9) ist.

3. Fangvorrichtung (1), nach Anspruch 1 oder Anspruch 2,
**dadurch gekennzeichnet,**
**dass** in dem Korpus (2) mindestens eine Schlagfalle (17) angeordnet ist, die mit mindestens einem Auslöser (8) und/oder mit mindestens einem Sensor (9) in Wirkverbindung steht, wobei die Schlagfalle (17) einen Schlagbügel (18) aufweist, der mittels eines Elektromotors (30) aus einer entspannten Lage in eine gespannte Lage verbringbar ist.

4. Fangvorrichtung (1), nach Anspruch 3,
**dadurch gekennzeichnet,**
**dass** zwischen dem Schlagbügel (18) und dem Elektromotor (30) mindestens ein Bowdenzug (33) und/oder mindestens ein Gestänge angeordnet ist.

5. Fangvorrichtung (1), nach einem der vorhergehenden Ansprüche,
**dadurch gekennzeichnet,**
**dass** die Fangvorrichtung (1) eine Stromversorgung aufweist.

6. Fangvorrichtung (1), nach Anspruch 5,
**dadurch gekennzeichnet,**
**dass** die Stromversorgung mindestens ein Akkumulator (13) ist.

7. Fangvorrichtung (1), nach einem der vorhergehenden Ansprüche,
**dadurch gekennzeichnet,**
**dass** der Korpus (2) zumindest teilweise aus Kunststoff ist.

8. Fangvorrichtung (1), nach einem der vorhergehenden Ansprüche,
**dadurch gekennzeichnet,**
**dass** die Fangvorrichtung (1) ein Halteelement (3) aufweist.

9. Fangvorrichtung (1), nach einem der vorhergehenden Ansprüche,
**dadurch gekennzeichnet,**
**dass** die Fangvorrichtung (1) mindestens eine Kletterhilfe (7) und/oder mindestens eine Serviceöffnung (25) aufweist.

10. Fangvorrichtung (1), nach einem der vorhergehenden Ansprüche,
**dadurch gekennzeichnet,**
**dass** die Fangvorrichtung (1) mindestens eine Kammer (23) aufweist.

11. Verfahren zum Töten eines Zieltieres mit einer Fangvorrichtung (1), die einen Korpus (2), der mindestens eine Öffnung (6, 19) aufweist, aufweist,
**dadurch gekennzeichnet,**
**dass** das durch die Öffnung (6, 19) in den Korpus (2) eingedrungene Zieltier durch Auslösung einer einen Schlagbügel (18) aufweisenden Schlagfalle (17) durch den Schlagbügel (18), der sich durch die Auslösung aus einer gespannten Lage in eine entspannte Lage bewegt, getötet wird, wobei der Schlagbügel (18) direkt oder zeitverzögert nach dem Erreichen der entspannten Lage mittels eines Elektromotors (30) aus der entspannten Lage in die gespannte Lage verbracht wird,
oder
das durch die Öffnung (6, 19) in den Korpus (2) eingedrungene Zieltier an mindestens einer in den Korpus (2) angeordneten Köderfläche (12) Giftköder aufnimmt, um anschließend, bevor es verendet, den Korpus (2) wieder zu verlassen, wobei die Anwesenheit des Zieltieres innerhalb des Korpusses (2) durch mindestens einen Sensor (9) erfasst wird.

12. Verfahren, nach Anspruch 11,
**dadurch gekennzeichnet,**
**dass** das durch den Schlagbügel (18) getötete Zieltier durch Verbringung des Schlagbügels (18) in die gespannte Lage frei wird, so dass es aufgrund der Schwerkraft aus dem Korpus (2) gleitet.

13. Verfahren, nach Anspruch 11 oder Anspruch 12,
**dadurch gekennzeichnet,**
**dass** als Fangvorrichtung (1) eine Fangvorrichtung (1), gemäß einem der Ansprüche 1 bis 10, eingesetzt wird.

14. Verfahren zur Verwendung einer Fangvorrichtung (1), die einen Korpus (2), der mindestens eine Öffnung (6, 19) aufweist, aufweist,
**dadurch gekennzeichnet,**
**dass** in dem Korpus (2) mindestens eine Schlagfalle (17) angeordnet ist, die durch ihre Auslösung aus einem fangbereiten Zustand in einen nicht fangbereiten Zustand versetzt wird, wobei die Schlagfalle (17) einen Schlagbügel (18) aufweist, der mittels eines Elektromotors (30) aus einer entspannten Lage in eine gespannte Lage verbracht wird, wodurch der fangbereite Zustand der Schlagfalle (17) wieder hergestellt wird,
und/oder
das in dem Korpus (2) mindestens ein Sensor (9) angeordnet ist, wobei die Anwesenheit des Zieltieres innerhalb des Korpusses (2) durch mindestens einen Sensor (9) erfasst wird.

15. Verfahren, nach Anspruch 14,
**dadurch gekennzeichnet,**
**dass** als Fangvorrichtung (1) eine Fangvorrichtung (1), gemäß einem der Ansprüche 1 bis 10, eingesetzt wird.
